# EUROPÄISCHE PATENTANMELDUNG

(11) **EP 0 913 985 A1**
(43) Veröffentlichungstag der Anmeldung: **06.05.1999**
(21) Anmeldenummer: 98203585.9
(22) Anmeldetag: 23.10.1998
(51) Int. Cl.: H04M 15/28, H04Q 3/62, H04Q 3/66

(54) **Nebenstellenanlage mit Mitteln für ein Least-Cost-Routing**

(30) Priorität: 31.10.1997 DE 19748121
(71) Anmelder: Philips Patentverwaltung GmbH, 22335 Hamburg (DE); Koninklijke Philips Electronics N.V., 5621 BA Eindhoven (NL)
(72) Erfinder: Schröter, Andreas, Dipl.-Ing., Röntgenstrasse 24, 22335 Hamburg (DE)
(74) Vertreter: Volmer, Georg, Dipl.-Ing.

(57) **Zusammenfassung**

Die Erfindung bezieht sich auf ein Telekommunikationssystem mit wenigstens einer Nebenstellenanlage (1.1), die mit Mitteln für ein Least-Cost-Routing (LCR) (11, 12) ausgestattet ist, die zur Lieferung von LCR-Verbindungsdaten vorgesehen sind, und mit wenigstens einem Endgerät (2). Um die Benutzerfreundlichkeit eines Telekommunikationssystem mit Least-Cost-Routing zu verbessern, ist vorgesehen, daß die Nebenstellenanlage (1.1) vor einer Vergebührung die für eine aufzubauende Verbindung gültigen LCR-Verbindungsdaten an das mit den jeweiligen Gebühren zu belastende Endgerät (2) übermittelt.

## Beschreibung

Die Erfindung bezieht sich auf ein Telekommunikationssystem mit wenigstens einer Nebenstellenanlage, die mit Mitteln für ein Least-Cost-Routing (LCR) ausgestattet ist, die zur Lieferung von LCR-Verbindungsdaten vorgesehen sind, und mit wenigstens einem Endgerät.

Die Least-Cost-Routing-Funktion (LCR) als Kriterium für die Pfadzuteilung ist ein bekanntes Merkmal, das insbesondere in privaten Telekommunikationssystemen mit mehreren gekoppelten Nebenstellenanlagen zur Verfügung gestellt wird. Dabei wird bei einem Verbindungsaufbau durch ein Teilnehmerendgerät von der zugehörigen Nebenstellenanlage der Pfad zum gewählten anderen Teilnehmerendgerät zur Verfügung gestellt, der die geringsten Betriebskosten verursacht. Diese bevorzugten Pfade werden vorher anhand von charakteristischen Daten (z.B. Gebühren pro Zeiteinheit, Länge der Zeiteinheit, Zeitpunkt des Verbindungswunsches etc.) ermittelt und in geeigneter Form gespeichert. Dabei können auch alternative Pfade mit jeweiligen Prioritäten berechnet werden, die dann gewählt werden, wenn der optimale Pfad gerade nicht benutzt werden kann (z. B. aufgrund Überlastung oder Unterbrechung).

Aus der amerikanischen Patentschrift US 5,452,351 ist eine Nebenstellenanlage mit einer LCR-Funktion bekannt, die innerhalb eines Telekommunikationssystems mit anderen Nebenstellenanlagen gekoppelt sein kann. Der in US 5,452,351 offenbarten Nebenstellenanlage sind mehrere Teilnehmerendgeräte zugeordnet. Weiterhin ist der Nebenstellenanlage eine Steuereinheit zugeordnet, die Speichermittel und Verarbeitungsschaltkreise für LCR-Funktionen aufweist. An die Steuereinheit ist ein Eingabe/Ausgabe-Gerät ("Terminal") angeschlossen, das eine Tastatur zur Eingabe von Daten und eine LCD-Anzeigevorrichtung zur Ausgabe von Daten aufweist.

Über das Ein-/Ausgabegerät werden der Steuereinheit LCR-Daten zugeführt, die in den Speichermitteln abgelegt werden. Wenn ein Verbindungswunsch von einem der Teilnehmerendgeräte aus dem privaten Telekommunikationssystem heraus zu einem externen Teilnehmer generiert wird, stellt die Steuereinheit anhand der in ihr gespeicherten LCR-Daten den Pfad zu dem gerufenen anderen Teilnehmerendgerät zur Verfügung, der die geringsten Betriebskosten pro Zeiteinheit verursacht.

Weiterhin sind aus dem Artikel "Software sorgt für günstigste Verbindung" aus VDI-Nachrichten, Nr. 10, 8.3.1996 die Verfahrensweise und die Vorteile einer TK-Anlage mit einer Least-Cost-Routing Funktion bekannt. Insbesondere bei komplexeren Netzen mit mehreren TK-Anlagen, die über verschiedene Festverbindungen gekoppelt sind, liefert die TK-Anlage mit LCR Funktion basierend auf der gesamten Netztopologie aufgrund von aktuellen Verkehrsdaten (z.B. die Auslastung einzelner Netzabschnitte zu Spitzenzeiten) die günstigste Verbindung. In Abhängigkeit von dem gewählten Teilnehmerendgerät liefert die TK-Anlage für ein Gespräch, für Datenübertragungen oder Videokonferenzen die günstigste Verbindung. Dabei wird unter bestimmten, vorher definierbaren Bedingungen (z.B. Auslastung aller Festverbindungen) aus dem Netz ausgestiegen und eine öffentliche Verbindungen genutzt. Wenn mehrere öffentliche Netze zur Verfügung stehen, wird die Auswahlmöglichkeit für den Ort des Ausstiegs und das öffentliche Netz noch größer. Eine möglicherweise sehr umfangreiche Umleitung eines Anrufes kann für einen Anrufer erhebliche Nachteile verursachen. Durch einen Ausstieg in ein öffentliches Netz entstehen unvorhergesehene stark überhöhte Kosten, ohne daß der Anrufer eingreifen kann. Da die Programmierung der LCR-Verbindungsdaten vom Netzbetreiber frei wählbar ist, wird ein Anrufer über den aktuellen Pfad (und damit über die Kosten) seiner Verbindung im Unklaren gelassen.

Die Aufgabe der Erfindung ist es, die Benutzerfreundlichkeit eines Telekommunikationssystem mit Least-Cost-Routing zu verbessern.

Die Aufgabe wird dadurch gelöst, daß die Nebenstellenanlage vor einer Vergebührung zur Übermittlung der für eine aufzubauende Verbindung gültigen LCR-Verbindungsdaten an das mit den jeweiligen Gebühren zu belastende Endgerät vorgesehen ist. Damit erhält ein Benutzer an seinem Endgerät genaue Informationen über die Gebühren, die für die gewünschte Verbindung anfallen werden. Die Vergebührung der Verbindung, d.h. die Kosten entstehen bei der Übermittlung der Daten noch nicht. Es wird der für die Verbindung tatsächlich gültige Pfad übermittelt und vorzugsweise auf einem Display angezeigt oder über einen Lautsprecher des Endgerätes angesagt. Bei erhöhten Gebühren für den Benutzer aufgrund einer Pfadumleitung mit einem Ausstieg in ein öffentliches Netz, z. B. wegen einer belegten festen Leitung, kann der Benutzer entscheiden, ob und wie lange die Verbindung aufgebaut werden soll.

In einer bevorzugten Weiterbildung der Erfindung ist in der Nebenstellenanlage ein Tarifdatenspeicher zur Speicherung von Verbindungstarifen, ein LCR-Datenspeicher zur Speicherung von LCR-Verbindungsdaten und eine Verarbeitungseinheit zur Ermittlung von Verbindungsgebühren anhand der LCR-Verbindungsdaten und der zugehörigen Verbindungstarife und zur Übermittlung der Verbindungsgebühren an das mit den jeweiligen Gebühren zu belastende Endgerät vorgesehen. Im Tarifdatenspeicher werden die Verbindungstarife, die von der Zeit und vom beanspruchten Dienst (Video-, Audio- oder Datenübertragung) abhängig sein können, jeweils für alle zur Verfügung stehenden Telekommunikationsnetze gespeichert. Der Tarifdatenspeicher kann jederzeit aktualisiert oder erweitert werden. Auch der LCR-Datenspeicher ist ausreichend groß dimensioniert, so daß flexible Anpassungen möglich sind. Die Ermittlung und Aufbereitung der Daten kann dabei mittels eines PC vorgenommen werden, so daß die Daten lediglich noch übertragen werden müssen. Die Tarifdaten werden vorzugsweise für alle möglichen Telekommunikationsnezte auf eine gemeinsame Zeitbasis (beispielsweise Gebühren/10 Sekunden) normiert. Die Verarbeitungseinheit addiert dann die Gebühren der Netze, die nach den LCR-Verbindungsdaten zu der vom Benutzer gewünschten Verbindung gehören, und übermittelt die Verbindungsgebühren an das Endgerät des Benutzers. Die Verarbeitungseinheit kann dabei in Hardware oder als Software in Verbindung mit einem Prozessor realisiert sein.

Im folgenden soll ein Ausführungsbeispiel der Erfindung anhand von Zeichnungen näher erläutert werden. Dabei zeigen
- Figur 1:: ein Blockschaltbild eines Telekommunikationssystems mit einem privaten Telekommunikationsnetz und öffentlichen Vermittlungsstellen und
- Figur 2:: ein Blockschaltbild einer erfindungsgemäßen Nebenstellenanlage in einem privaten Telekommunikationsnetz.

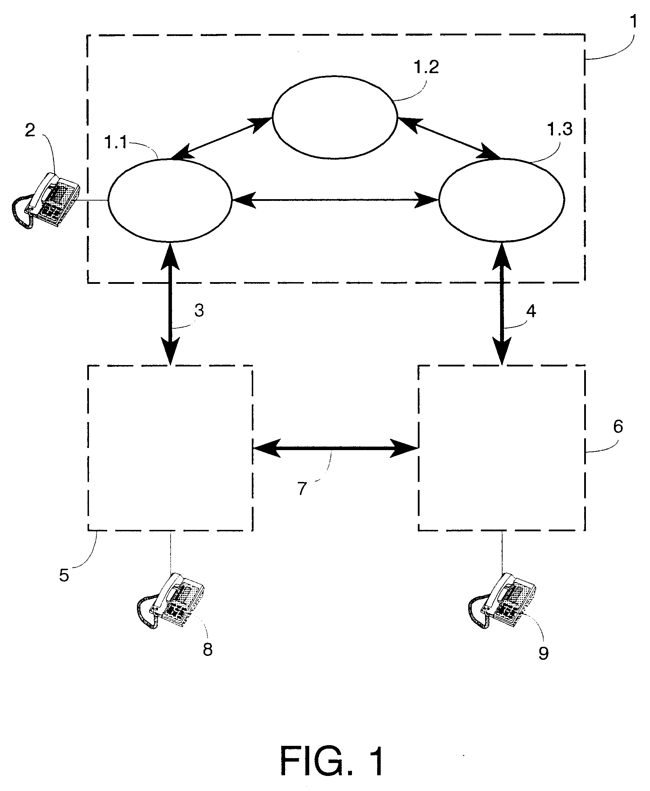

Das Telekommunikationssystem in der Figur 1 besteht aus einem privaten TK-Netz 1 mit drei Nebenstellenanlagen 1.1, 1.2 und 1.3, die über eigene oder gemietete Festverbindungen miteinander verbunden sind. Beispielhaft für die Vielzahl unterschiedlicher TK-Geräte, die an die Nebenstellen 1.1 - 1.3 angeschlossen sein können, ist das Teilnehmerendgerät 2 dargestellt, das mit der mit Mitteln für ein Least Cost Routing ausgestatteten Nebenstellenanlage 1.1 gekoppelt ist. Das private TK-Netz 1 ist an den Nebenstellenanlagen 1.1 und 1.3 jeweils über ein öffentliches Netz 3 und 4 mit öffentlichen Vermittlungsstellen 5 und 6 verbunden. An die öffentlichen Vermittlungsstellen 5 und 6 sind weitere Vermittlungsstellen und/oder verschiedene TK-Geräte 8 bzw. 9 angeschlossen. Zwischen den Vermittlungsstellen 5 und 6 liegt ein öffentliches Netz 7. Die öffentlichen Netze 3, 4 und 7 können von unterschiedlichen Anbietern betrieben werden. Im privaten TK-Netz 1 sind die Nebenstellenanlagen 1.1 und 1.3 an weit auseinander liegenden Standorten über eine kostengünstige Festverbindung miteinander verbunden. Weiterhin gilt in den öffentlichen Netzen 3 und 4 ein günstiger Nahtarif, während die Verbindung im öffentlichen Netz 7 mit einem teuren Ferntarif belastet ist.

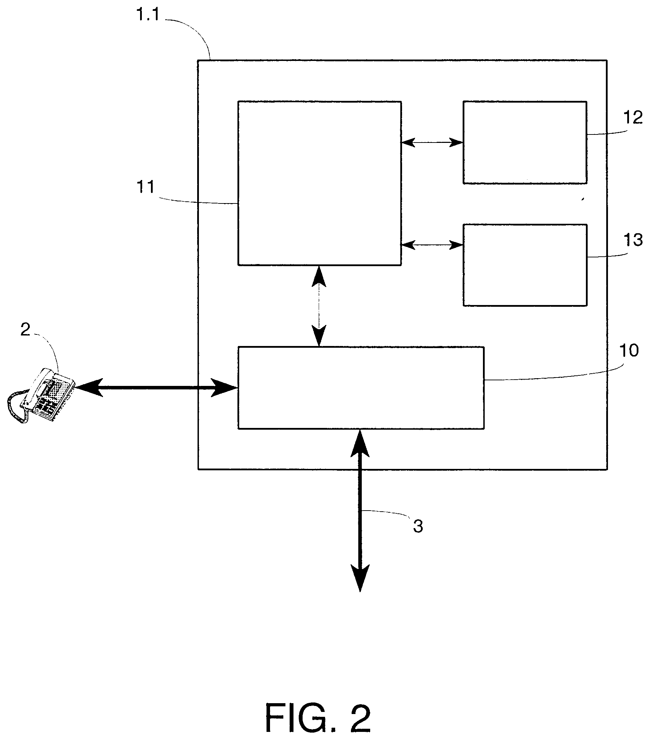

In der Figur 2 ist die Nebenstellenanlage 1.1 detaillierter dargestellt. Eine Vermittlungseinheit 10 führt alle vermittlungstechnischen Funktionen der Nebenstellenanlage 1.1 für die gekoppelten TK-Geräte 2 aus. Die Vermittlungseinheit 10 stellt Verbindungen zu anderen Nebenstellenanlagen 1.2 und 1.3 des privaten TK-Netzes über Festverbindungen und zum öffentlichen Netz 3 her. Mit der Vermittlungseinheit 10 ist eine Verarbeitungseinheit 11 gekoppelt, die die Least Cost Routing Funktionen ausführt. Dazu ist sie mit einem LCR-Datenspeicher 12 verbunden, in dem bevorzugte Pfade für von dieser Nebenstellenanlage 1.1 ausgehende Verbindungen gespeichert sind. Jeder vom Teilnehmerendgerät 2 gewählten Verbindung ist im LCR-Datenspeicher 12 ein bevorzugter Pfad zugeordnet, der nach einstellbaren Bedingungen (z.B. Verbindungstarife, Uhrzeit, Verbindungsauslastung) und anhand der gesamten Topologie des privaten TK-Netzes 1 ermittelt und gespeichert wurde. Zusätzlich ist noch ein alternativer Pfad vorgesehen, der ausgewählt wird, wenn der bevorzugte Pfad belegt ist. Die Ermittlung der Pfade kann vorzugsweise unabhängig von der Nebenstellenanlage mittels eines PC erfolgen, wobei die ermittelten LCR-Daten anschließend in den LCR-Datenspeicher 12 übertragen werden.

Die Verarbeitungseinheit 11 liefert die LCR-Daten an die Vermittlungseinheit 10, die die entsprechende Verbindung herstellt. Weiterhin greift die Verarbeitungseinheit 11 noch auf einen Tarifdatenspeicher 13 zu, in dem die Tarifdaten gespeichert sind. Der Tarifdatenspeicher 13 enthält die zeit- und entfernungsabhängigen Tarife für alle zur Verfügung stehenden Verbindungen der gekoppelten privaten und öffentlichen TK-Netze 1, 3, 4 und 7.

Für den bevorzugten Pfad, der über mehrere Knoten (Vermittlungstellen 5, 6 und/oder Nebenstellenanlagen 1.2, 1.3) in unterschiedlichen Netzen führen kann, werden aus dem Tarifdatenspeicher 13 für alle Teilstücke die entsprechenden Tarife ausgelesen. Durch entsprechende Zuordnung und Normierung auf eine gemeinsame Zeitbasis (z.B. pro 10 Sekunden) ermittelt die Verarbeitungseinheit 11 eine aktuell gültige Verbindungsgebühr pro Zeiteinheit für den gesamten Pfad. Diese Verbindungsgebühr wird dem mit dieser Verbindungsgebühr zu belastenden Teilnehmerendgerät 2 übermittelt bevor die Vermittlungseinheit 10 die Verbindung aufbaut. Auf diese Weise wird ein Benutzer vorab über die anfallenden Gebühren informiert und kann damit entsprechend reagieren. Insbesondere kann so festgestellt werden, ob aufgrund des LCR-Verfahrens frühzeitig in ein teures öffentliches Netz 7 ausgestiegen werden muß. Dies ist insbesondere vorgesehen, wenn die günstigeren Festverbindungen des privaten TK-Netzes 1 belegt sind und daher ein alternativer Pfad verwendet werden soll.

Wenn ein Teilnehmer 2 die Rufnummer des Teilnehmers 9 wählt, würde die günstigste Verbindung über die entfernt liegende Nebenstellenanlage 1.3 innerhalb des privaten TK-Netzes 1 führen. Dadurch werden günstige Festverbindungen innerhalb des privaten TK-Netzes 1 genutzt und lediglich von der Nebenstellenanlage 1.3 zur öffentlichen Vermittlungsstelle 6 ein öffentliches Netz 4 benutzt, in dem dann zumindest nur ein Nahtarif anfällt. Wenn die Verbindungen des privaten TK-Netzes 1 zur Nebenstellenanlage 1.3 belegt sind, wählt die Verarbeitungseinheit 11 einen alternativen Pfad ohne Einfluß des Teilnehmers 2 aus. Dann wird an der Nebenstellenanlage 1.1 direkt aus dem privaten TK-Netz 1 in das öffentliche Netz 3 ausgestiegen. Über die öffentliche Vermittlungsstelle 5 muß die große Entfernung zur öffentlichen Vermittlungsstelle 6 über das öffentliche Netz 7 überbrückt und so die Verbindung zum Teilnehmer 9 hergestellt werden. Dabei fallen vom Teilnehmer 2 zunächst unbemerkt aufgrund eines teuren Ferntarifs im öffentlichen Netz 7 unerwartet hohe Kosten an. Um dem Benutzer darüber rechtzeitig zu informieren, wird nicht nur der anhand der LCR-Daten ausgewählte Pfad an das Teilnehmerendgerät 2 übermittelt, sondern die mittels der Tarifdaten von der Verarbeitungseinheit 11 ermittelte Verbindungsgebühr. Damit steht dem Teilnehmer vor Gesprächsbeginn die Information über die Kosten pro Zeiteinheit beispielsweise auf einem Display des Teilnehmerendgerätes 2 zur Verfügung.

## Patentansprüche

1. Telekommunikationssystem mit wenigstens einer Nebenstellenanlage (1.1), die mit Mitteln für ein Least-Cost-Routing (LCR) (11, 12) ausgestattet ist, die zur Lieferung von LCR-Verbindungsdaten vorgesehen sind, und mit wenigstens einem Endgerät (2),
dadurch gekennzeichnet,
daß die Nebenstellenanlage (1.1) vor einer Vergebührung zur Übermittlung der für eine aufzubauende Verbindung gültigen LCR-Verbindungsdaten an das mit den jeweiligen Gebühren zu belastende Endgerät (2) vorgesehen ist.

2. Telekommunikationssystem nach Anspruch 1,
dadurch gekennzeichnet,
daß in der Nebenstellenanlage (1.1)
- ein Tarifdatenspeicher (13) zur Speicherung von Verbindungstarifen,
- ein LCR-Datenspeicher (12) zur Speicherung von LCR-Verbindungsdaten und
- eine Verarbeitungseinheit (11) zur Ermittlung von Verbindungsgebühren anhand der LCR-Verbindungsdaten und der zugehörigen Verbindungstarife und zur Übermittlung der Verbindungsgebühren an das mit den jeweiligen Gebühren zu belastende Endgerät (2)
vorgesehen ist.

3. Nebenstellenanlage (1.1) mit Mitteln für ein Least-Cost-Routing (LCR) (11, 12), die zur Lieferung von LCR-Verbindungsdaten vorgesehen sind, und mit wenigstens einem Endgerät (2),
dadurch gekennzeichnet,
daß die Nebenstellenanlage (1.1) vor einer Vergebührung zur Übermittlung der für eine aufzubauende Verbindung gültigen LCR-Verbindungsdaten an das mit den jeweiligen Gebühren zu belastende Endgerät (2) vorgesehen ist.
